# EUROPEAN PATENT APPLICATION

(11) **EP 4 782 817 A1**
(43) Date of publication of application: **29.07.2026**
(21) Application number: 25154047.2
(22) Date of filing: 27.01.2025
(51) Int. Cl.: G01N 21/17, G01N 29/24

(54) **A DEVICE FOR ANALYSIS OF A TEST OBJECT USING PHOTO-ACOUSTIC EFFECT AND A METHOD FOR CONTROLLING INDUCING OF A PHOTO-ACOUSTIC EFFECT**

(71) Applicant: Imec VZW, 3001 Leuven (BE)
(72) Inventor: KJELLMAN, Jon, 2800 Kongens Lyngby (DK); ROTTENBERG, Xavier, 3010 Kessel-Lo (BE)
(74) Representative: AWA Sweden AB

(57) **Abstract**

A device (100) for analysis of a test object (10) using photo-acoustic effect comprises: an optical arrangement (102) configured to output spatially separated light comprising a plurality of wavelengths, wherein light of different wavelengths of the plurality of wavelengths is separated into different spatial directions; and a spatial light modulator (130) configured to receive the spatially separated light, wherein the spatial light modulator (130) comprises a plurality of individually controllable regions (132), wherein each individually controllable region (132) is configured to receive a portion of the spatially separated light for associating each individually controllable region (132) with a specific wavelength of the plurality of wavelengths, wherein each individually controllable region (132) is configured to modulate the portion of the spatially separated light with a modulation frequency for generating modulated light for inducing a photo-acoustic effect in the test object.

## Description

### Technical field

The present description relates to inducing a photo-acoustic effect in a test object. In particular, the present description relates to forming light that may be suitably used for inducing the photo-acoustic effect.

### Background

In optical absorption spectroscopy, absorption of light is measured as a function of wavelengths. The measured absorption may be used for identifying atomic and molecular compounds of gases, liquids, and solids. One of the most sensitive techniques for optical absorption spectroscopy is photo-acoustic spectroscopy (PAS).

In PAS, light is modulated at a modulation frequency in a range corresponding to an acoustic frequency range. The absorption of light may thus vary based on the modulation frequency. In the following a simplistic explanation of PAS is provided.

When light is absorbed, a test object may be slightly heated and may thereby expand, whereas when light is no longer absorbed, the test object may cool down and thereby contract. The modulation of light may thus cause the test object to vibrate at the modulation frequency inducing output of a vibration or sound at the modulation frequency.

PAS uses a photo-acoustic effect in that the absorption of light induces output of an acoustic wave which may be detected by a detector. However, it should be realized that the photo-acoustic effect may be used in alternative manners. For instance, in photo-acoustic imaging, a plurality of sensors may be used for determining an origin of the acoustic wave such that a location at which light was absorbed may be determined.

A particular compound may have a spectral profile comprising a plurality of absorption peaks at different wavelengths of light. Further, different compounds may have different spectral profiles. Thus, using a plurality of wavelengths to determine an absorption spectrum, presence of different compounds may be identified and distinguished from each other. Hence, there is a need of using multiple wavelengths of light in analysis of the test object using the photo-acoustic effect. In addition, the detection of an acoustic wave emitted by the test object needs to be linked to the wavelength of light inducing the acoustic wave.

The use of multiple wavelengths of light and detection of the induced acoustic waves related to the respective wavelengths may typically be achieved by sweeping or tuning the wavelength of light such that a single wavelength of light is output at a time. However, this implies that analysis of the test object may be very time-consuming.

### Summary

An objective of the present description is to enable rapid analysis of a test object using the photo-acoustic effect at multiple wavelengths. A further objective of the present description is to enable the inducing of the photo-acoustic effect using a compact device.

These and other objectives are at least partly met by the invention as defined in the independent claims. Preferred embodiments are set out in the dependent claims.

According to a first aspect, there is provided a device for analysis of a test object using photo-acoustic effect, said device comprising: an optical arrangement configured to output spatially separated light comprising a plurality of wavelengths, wherein light of different wavelengths of the plurality of wavelengths is separated into different spatial directions; and a spatial light modulator configured to receive the spatially separated light, wherein the spatial light modulator comprises a plurality of individually controllable regions, wherein each individually controllable region is configured to receive a portion of the spatially separated light for associating each individually controllable region with a specific wavelength of the plurality of wavelengths, wherein each individually controllable region is configured to modulate the portion of the spatially separated light with a modulation frequency for generating modulated light for inducing a photo-acoustic effect in the test object.

Thanks to the device, a plurality of wavelengths of light are provided onto different regions of the spatial light modulator. Thus, different wavelengths of light are associated with different regions of the spatial light modulator. Further, the spatial light modulator comprises individually controllable regions. Thus, the spatial light modulator may individually control the modulation for specific wavelengths.

The device thus enables simultaneously receiving the plurality of wavelengths at the spatial light modulator. Further, the individually controllable regions may then be controlled to modulate light at different modulation frequencies for different wavelengths. This implies that the induced photo-acoustic effect would exhibit acoustic waves at a plurality of different frequencies, such that a response related to a specific wavelength may be detected based on the specific frequency of the detected acoustic wave. Hence, the device allows distinguishing of photo-acoustic response for different wavelengths, even if the wavelengths are simultaneously output.

It should be realized that the device need not necessarily be used for simultaneous modulation of the plurality of wavelengths. Rather, the plurality of wavelengths may be sequentially provided onto the regions of the spatial light modulator. However, the use of individually controllable regions that are associated with a specific wavelength, still allows controlling modulation individually for each specific wavelength such that accurate control of the modulation is provided.

The device may be used for providing analysis of a test object. The device generates modulated light which is configured to induce a photo-acoustic effect in the test object, such that the response of the test object based on the photo-acoustic effect enables analysis of the test object. The device is thus suitable for providing analysis of the test object.

The device may ensure that the response of the test object is triggered, which may be further detected and processed for providing a result of the analysis of the test object. The analysis could for instance correspond to determining presence of compounds in the test object or for imaging the test object. However, the device need not necessarily include a detector and a processor for reaching a result of the analysis. However, the device will at least generate modulated light for inducing the photo-acoustic effect allowing the test object to be analyzed.

The test object may be any type of object to be tested. The object may for instance be in a solid, liquid, or gaseous state.

The photo-acoustic effect relates to a modulation of light that is being absorbed by the test object, such that the test object outputs an acoustic wave with a frequency corresponding to the modulation frequency. It should be realized that the acoustic wave need not be related to audible sound. Rather, the modulation frequency may have a frequency outside the audible range, such as in an infrasound range or in an ultrasound range.

The photo-acoustic effect may be used in various applications, such as in photo-acoustic absorption spectroscopy and in photo-acoustic imaging.

The optical arrangement is configured to provide spatially separated light of different wavelengths. Thus, different wavelengths of light are incident on different regions of the spatial light modulator. It should be realized that the optical arrangement may be configured to achieve the spatial separation of light of different wavelengths in many different manners.

The optical arrangement may comprise one or more components for providing the spatial separation of light. According to an embodiment, the optical arrangement comprises a diffractive element, which is configured to receive light comprising a plurality of wavelengths and configured to form spatially separated light. Thus, the diffractive element may be configured to receive a light beam including a mix of the plurality of wavelengths, wherein the diffractive element is configured to separate light into different wavelength components. The diffractive element may be configured to receive light from a single light source providing a range of wavelengths of light. The diffractive element may alternatively be configured to receive light from multiple light generating units, such that a bandwidth of the range of wavelengths of light received by the diffractive element may be increased. It should be realized that the light source or light generating units may be external to the device such that the device receives light from the external light source or light generating units and provides a spatial separation of light of different wavelengths by means of the diffractive element.

The diffractive element may be any element that is configured to spatially separate light of different wavelengths. By way of example, the diffractive element may be a prism or a diffraction grating. In addition, the optical arrangement may comprise a plurality of diffractive elements arranged in series such that the light separated by a first diffractive element is incident onto one or more additional diffractive elements. This may be used for separating light providing a variation of wavelength of light in two dimensions on a surface of the spatial light modulator.

However, in another embodiment, the optical arrangement comprises a plurality of light generating units configured to generate different wavelengths of light. Each of the light generating units may have a unique spatial direction, such that light from the different light generating units is spatially separated. This implies that light from different light generating units may be directed towards different regions of the spatial light modulator for providing different wavelengths of light incident at different regions.

According to yet another embodiment, a plurality of light generating units may be used together with a plurality of diffractive elements, such that each diffractive element is associated with a unique light source. Thus, the diffractive elements may be adapted to separating of light in a wavelength range of the light generated by the respective light generating units.

The light being separated into different spatial directions implies that light having different wavelengths is propagating in different parts of space. The spatial directions may be parallel. Alternatively, the spatial directions of the light of different wavelengths may define a non-zero angle in relation to each other.

The spatially separated light is incident on the spatial light modulator. The light of different wavelengths may thus be incident on different regions of the spatial light modulator. Hence, each region of the spatial light modulator is associated with a specific wavelength of the plurality of wavelengths.

It should be realized that the plurality of wavelengths may define a continuous range of wavelengths within a wavelength spectrum or may comprise a plurality of discrete wavelengths. Each wavelength within the continuous range or in the plurality of discrete wavelengths may be defined by a wavelength band. Thus, each wavelength may be defined by a band. For instance, each wavelength may be defined by a wavelength band having a spectral bandwidth of 1 pm-50 nm, such as a bandwidth of 10 pm-25 nm.

It should be realized that different wavelengths may be defined by partially overlapping wavelength bands or may have completely separate wavelength bands.

The individually controllable regions being associated with specific wavelengths implies that different regions are associated with different wavelengths. Each region may be associated with a unique wavelength, such that a specific wavelength is only incident on a single region. However, in other embodiments, some regions receive the same wavelengths, while other regions receive other wavelengths.

The spatial light modulator may be any component that is configured to modulate light, wherein modulation of light is controlled spatially, such that different modulations may be provided in different spatial locations. The spatial light modulator may be configured to reflect light or transmit light and may be configured to provide a modulation of the reflected or transmitted light.

The modulation of light may be provided by changing direction of reflected or transmitted light so as to change an amount of light that is directed towards the test object. The modulation of light may alternatively be provided by changing reflectance or transmittance of light in the individually controllable region. This may be used for modulating intensity of light.

However, it should be realized that another property of light may be alternatively or additionally modulated, such as providing modulation of polarization of light. This may be used for inducing a photo-acoustic effect in a test object, wherein absorption is dependent on polarization of light.

The spatial light modulator may be formed by components which are individually controllable. The components may for instance be formed in a one-dimensional or two-dimensional array, wherein the components are regularly arranged in the array. Each component may be related to a specific spatial location in the spatial light modulator forming an individually controllable region.

The individually controllable regions may for instance be formed by mirrors or liquid crystals, which may be controlled for controlling a direction of light output by the spatial light modulator and/or controlling a polarization of light output by the spatial light modulator.

The regions may be digitally controlled, such that a digital control unit may generate a control signal for controlling the individually controllable regions. This may facilitate simple control of the regions and enabling simultaneous control of a plurality of regions. However, each region may in some embodiments receive an analog signal for controlling the region.

The individually controllable region may provide modulation using a square modulation waveform. For instance, the region may alternate between directing all light towards the test object or directing no light towards the test object. However, according to other embodiments, the modulation may be provided by a sinusoidal waveform, or any other waveform shape. Using a sinusoidal waveform, harmonic frequencies may be avoided such that cross-talk between different acoustic frequencies may be reduced or avoided.

Each region is configured to modulate the portion of the spatially separated light received by the region. Since different portions of light having different wavelengths are received by different regions, different modulation controlled by the different regions may also be provided for different wavelengths of light.

The spatial light modulator may comprise a surface at which the spatially separated light from the optical arrangement is incident. Each region of the spatial light modulator is associated with a respective part of the surface of the spatial light modulator.

According to an embodiment, the individually controllable regions of the spatial light modulator are configured to modulate the spatially separated light with a plurality of modulation frequencies, such that the modulation frequency associated with each specific wavelength of light is mutually unique.

This implies that the modulation frequency is tied to a specific wavelength of light. The photo-acoustic response from the test object may be detected so as to distinguish between different modulation frequencies. Hence, by using a plurality of modulation frequencies, the photo-acoustic response for different wavelengths of light may be distinguished.

This facilitates output of the plurality of wavelengths from the spatial light modulator simultaneously. Hence, the device facilitates providing photo-acoustic analysis based on multiple wavelengths in a very fast manner.

According to an embodiment, the individually controllable regions are controlled by the plurality of modulation frequencies, wherein harmonics of each frequency in the plurality of modulation frequencies are distinct from all other frequencies of the plurality of modulation frequencies.

This implies that cross-talk between different modulation frequencies is reduced or completely avoided. This further facilitates distinguishing between photo-acoustic response for different wavelengths of light.

The modulation frequencies may be related to each other such that no modulation frequency is an integer of another modulation frequency. This ensures that harmonics of a modulation frequency does at least not exactly match another modulation frequency.

According to an embodiment, the individually controllable regions are configured to simultaneously modulate the portions of the spatially separated light associated with each individually controllable region.

This implies that the light of different wavelengths is simultaneously output towards the test object for causing a photo-acoustic effect. By providing different modulation frequencies for different wavelengths, the photo-acoustic response associated with each wavelength may be distinguished from photo-acoustic responses of other wavelengths.

According to an embodiment, the individually controllable regions are configured to be controlled between an active state and an inactive state, wherein the individually controllable regions in the active state are configured to modulate the portion of the spatially separated light and wherein the individually controllable regions in the inactive state are configured to avoid output of light for inducing a photo-acoustic effect.

Each individually controllable region may thus be set into an inactive state, where the region does not cause any modulation of light. The inactive state may be achieved by holding the region in a constant condition, such that the region does not provide any varying effect on light being incident on the region.

For instance, the individually controllable region may in the inactive state be set to direct light incident on the region such that light output by the region does not reach the test object, e.g., by tilting a mirror of the individually controllable region such that incident light is reflected into a direction so as not to reach the test object.

However, it should be realized that the individually controllable region may in the inactive state be set to direct light incident on the region such that light output by the region is directed towards the test object. By keeping the individually controllable region in a constant condition, the light reaching the test object would then not be modulated and, hence, no photo-acoustic effect is caused in the test object.

It should further be realized that the condition of the individually controllable region in the inactive state may also be part of the varying conditions used during modulation of light by the individually controllable region. For instance, during modulation of light, the individually controllable region may be configured to vary a tilting angle of a mirror between a maximum and minimum tilting angle, so as to cause a variation of an amount of light being directed towards the test object and, hence, generating modulated light. In the inactive state, the individually controllable region may be set such that the mirror is constantly held at a particular tilting angle, e.g., the maximum tilting angle.

In the inactive state, the individually controllable region may be set into a condition which requires no power for maintaining the condition. For instance, if the individually controllable region comprises a mirror, the mirror may be controlled to assume a tilting angle. Thereafter, no control signal is needed, and the mirror may maintain the set tilting angle without causing any power consumption.

If the individually controllable regions are configured to simultaneously generate modulated light, the individually controllable regions may be simultaneously brought from the inactive state to the active state for initiating simultaneous modulation of the portions of the spatially separated light associated with each individually controllable region.

According to an embodiment, the individually controllable regions are configured to be sequentially set to the active state for sequentially outputting modulated light of different specific wavelengths.

This implies that the device may be configured to output modulated light of only one wavelength at a time. By sequentially setting the regions to the active state, the device may generate modulated light in a sequence of different wavelengths for allowing analysis of the test object based on multiple wavelengths.

The device may be configured to provide light of a plurality of wavelengths onto the spatial light modulator. Thus, the device may for instance be used with a broadband light source generating a plurality of wavelengths simultaneously. The controlling of the individually controllable regions to be set sequentially into the active state may thus still ensure that wavelengths are sequentially used for inducing the photo-acoustic effect in the test object.

When the individually controllable regions are sequentially set to the active state, there is only a single wavelength of light being modulated at a time. This implies that the individually controllable regions may all use the same modulation frequency, as photo-acoustic responses associated with different wavelengths may be distinguished by a time point of detecting the photo-acoustic response. However, the individually controllable regions may alternatively still be configured to modulate the spatially separated light with mutually unique modulation frequencies. This may facilitate processing of detected photo-acoustic responses since photo-acoustic responses associated with different wavelengths may still be distinguished based on detected frequencies. For instance, this may facilitate storing data representing detection of the photo-acoustic responses of the different wavelengths and processing the stored data at a later point in time.

It should also be realized that a combination of simultaneous and sequential modulation may be used. At each step in a sequence, a group of individually controllable regions may be configured to simultaneously modulate spatially separated light associated with the individually controllable regions in the group. Thus, in a first step, a first group of individually controllable regions may be in the active state, and in a second step, a second group of individually controllable regions may be in the active state, and so on. The individually controllable regions belonging to the first group are different from the individually controllable regions belonging to the second group. The individually controllable regions within a group may be configured to modulate light with mutually unique modulation frequencies. However, individually controllable regions in different groups may use the same modulation frequency.

According to an embodiment, the spatial light modulator comprises a plurality of mirrors, wherein each individually controllable region is associated with one or more unique mirrors of the plurality of mirrors, wherein an angular orientation of the mirrors is individually controllable.

The plurality of mirrors may be arranged at a surface of the spatial light modulator. Each mirror may be set in a first condition where the mirror is parallel to the surface. The mirrors may in this condition touch each other at edges of the mirrors or may be set with small gaps between the mirrors. The plurality of mirrors being in the first condition may thus define a large planar surface for reflecting light towards the test object. By tilting a mirror away from this condition, the amount of light being directed towards the test object by the mirror may be changed.

The spatial light modulator may be formed by a digital micromirror device, which may allow the mirrors to be simply controlled by digital signals.

According to an embodiment, each mirror is configured with a resonance vibration frequency, wherein different mirrors associated with different individually controllable regions are configured with different resonance vibration frequencies.

This implies that modulation of light may be achieved using a vibration frequency of the mirrors such that the modulation may be easily provided. By the individually controllable regions being manufactured to have different resonance vibration frequencies, the individually controllable regions may be easily controlled to provide mutually unique modulation frequencies.

It should be realized that the spatial light modulator may be implemented in different manners. For instance, the spatial light modulator may comprise a plurality of liquid crystal units, wherein a liquid crystal may be modulated to control a property of light propagating through the liquid crystal. The liquid crystal units may for instance be implemented as a liquid crystal display (LCD) or as liquid crystal on silicon (LCOS).

According to an embodiment, the device further comprises a light source configured to generate the light comprising the plurality of wavelengths and configured to output the light comprising the plurality of wavelengths to a diffractive element, wherein the diffractive element is configured to form the spatially separated light.

The light source and the diffractive element may thus form part of the optical arrangement of the device. However, it should be realized that the optical arrangement may in some embodiments comprise a diffractive element, whereas a light source may be external to the device.

The light source may be a single light generating unit that is configured to simultaneously generate the plurality of wavelengths by generating wavelengths in a broad wavelength range. Alternatively, the light source may be formed by a plurality of light generating units. Each light generating unit may generate a specific wavelength of light in a narrow wavelength band. Alternatively, each light generating unit may generate light in a wavelength range. Together, the light generating units may provide light in a broad wavelength range. The light generating units may be configured to simultaneously output light to the diffractive element or may be configured to sequentially output light to the diffractive element.

The single light generating unit or the light generating units may be tunable for dynamically changing a wavelength of light being output by the light source.

The light source may for instance comprise an incandescent light bulb, a fluorescent lamp, a light-emitting diode (LED), an organic light-emitting diode (OLED), a laser, such as a laser diode or a laser configured to generate an optical frequency comb, or a supercontinuum light source.

According to an embodiment, the device may further comprise a recombining element, wherein the recombining element is configured to receive modulated light from the spatial light modulator and configured to output modulated light of different wavelengths in a common beam of modulated light.

Since spatially separated light is incident on the spatial light modulator, the spatial light modulator may output light that is spatially separated with different spatial portions having different wavelengths. A light beam output from the spatial light modulator may also be relatively wide such that the spatial light modulator may need to be close to the test object for providing appropriate illumination of the test object.

Thanks to using a recombining element, the output modulated light may be formed into a common beam wherein light of different wavelengths are mixed within the beam. The recombining element may also ensure that a beam width of the common beam is reduced in relation to a beam width of light received by the recombining element so as to ensure that light is directed towards the test object.

The recombining element may for instance be formed as a diffractive element, such as a prism. Alternatively, or additionally, a lens may be used for focusing light toward the test object.

The recombining element may be particularly useful when the device is used for providing modulated light to a small test object, or when the device is used for providing modulated light to an analysis set-up using acoustical resonance, wherein light may need to be provided to a well-defined small location,, such as in quartz enhanced photo-acoustic spectroscopy (QEPAS) or a small opening into an acoustically resonant analysis chamber.

According to an embodiment, the device further comprises a sensor unit configured to detect an acoustic response from the test object based on the photo-acoustic effect being induced in the test object by the modulated light.

However, it should be realized that the sensor unit may in some embodiments be external to the device. Thus, the device may be configured to control generation of modulated light, whereas the sensor unit for detecting the acoustic response may be arranged in a separate apparatus.

The sensor unit may be adapted to detect the acoustic response having the modulation frequency corresponding to modulation of the light.

For instance, the sensor unit may comprise an optomechanical ultrasound sensor (OMUS), a sensor comprising a tuning fork, such as a quartz-enhanced tuning fork, for detecting the acoustic response, or a piezo-electric sound transducer.

According to an embodiment, the sensor unit may comprise a single sensor. The single sensor may be used for simultaneously detecting acoustic responses with a plurality of modulation frequencies. The different modulation frequencies may be distinguished from each other by processing of signals acquired by the single sensor. If sequential output of modulated light of different specific wavelengths is provided, the single sensor may be used for sequentially detecting acoustic responses associated with different wavelengths.

According to an embodiment, the sensor unit comprises a plurality of individual sensors.

This may facilitate detecting detailed information of the test object.

For instance, the plurality of individual sensors may be used for detecting the same acoustic response. By determining a time offset between acoustic responses detected by different sensors, a location in the test object being an origin of the acoustic response may be determined. Thus, the plurality of individual sensors may be advantageously used for providing photo-acoustic imaging.

According to an embodiment, each individual sensor is configured to resonate at a resonance frequency, wherein the resonance frequencies of different individual sensors are different, and wherein the resonance frequencies of the individual sensors are matched to modulation frequencies of the spatial light modulator.

Thus, the individual sensors may be adapted to be particularly sensitive to the modulation frequencies, such that the acoustic responses may be accurately detected.

This may also imply that the individual sensors are sensitive to relatively narrow frequency bands of acoustic frequencies. This may imply that a risk of noise and cross-talk between different acoustic frequencies of different acoustic responses may be reduced or avoided.

The sensors being configured to resonate also implies that signal processing of the signals output by the sensors may be simplified and entirely analog signal processing may be provided.

According to an embodiment, the modulation frequency is in a range of 1 Hz - 200 MHz, such as in a range of 1 Hz - 1 MHz.

The modulation frequency used may be adapted to fit an application in which the device is used. For instance, if the device is used for photo-acoustic spectroscopy, the modulation frequency may be in a range of 1 Hz - 1 MHz, and preferably in a range of 1 Hz - 100 kHz. If the device is used for photo-acoustic imaging, the modulation frequency may be higher than modulation frequencies used in photo-acoustic spectroscopy, such as using a modulation frequency up to 200 MHz.

According to a second aspect, there is provided a method for controlling inducing of a photo-acoustic effect in a test object, said method comprising: forming spatially separated light onto a spatial light modulator, wherein light of different wavelengths of the plurality of wavelengths is separated into different spatial directions; and modulating the spatially separated light using a spatial light modulator comprising individually controllable regions, wherein each individually controllable region receives a portion of the spatially separated light for associating each individually controllable region with a specific wavelength of the plurality of wavelengths, wherein each individually controllable region modulates the portion of the spatially separated light with a modulation frequency for generating modulated light for inducing a photo-acoustic effect in the test object.

Effects and features of the second aspect are largely analogous to those described above in connection with the first aspect. Embodiments mentioned in relation to the first aspect are largely compatible with the second aspect.

Thanks to the method, a plurality of wavelengths of light are provided onto different regions of the spatial light modulator. Thus, modulation of different wavelengths of light may be individually controlled for providing individual control of the modulation for specific wavelengths.

According to an embodiment, the forming of spatially separated light may comprise receiving light comprising a plurality of wavelengths, and spatially separating the light to form the spatially separated light. The receiving and spatially separating may be performed by a diffractive element.

According to an alternative, the forming of spatially separated light may comprise separately outputting different wavelengths of light from different light generating units, wherein light from different light generating units is directed onto different individually controllable regions.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1 is a schematic view of a device according to an embodiment.
Fig. 2 is a graph illustrating transmitted intensity of modulated light of different wavelengths for simultaneous output of different wavelengths.
Fig. 3 is a graph illustrating transmitted intensity of modulated light of different wavelengths for sequential output of different wavelengths.
Fig. 4a is a schematic view of a variation of the device of Fig. 1.
Fig. 4b is a graph illustrating sensitivity of different sensors in a sensor unit of the device of Fig. 4a.
Fig. 5 is a flow chart of a method according to an embodiment.

### Detailed description

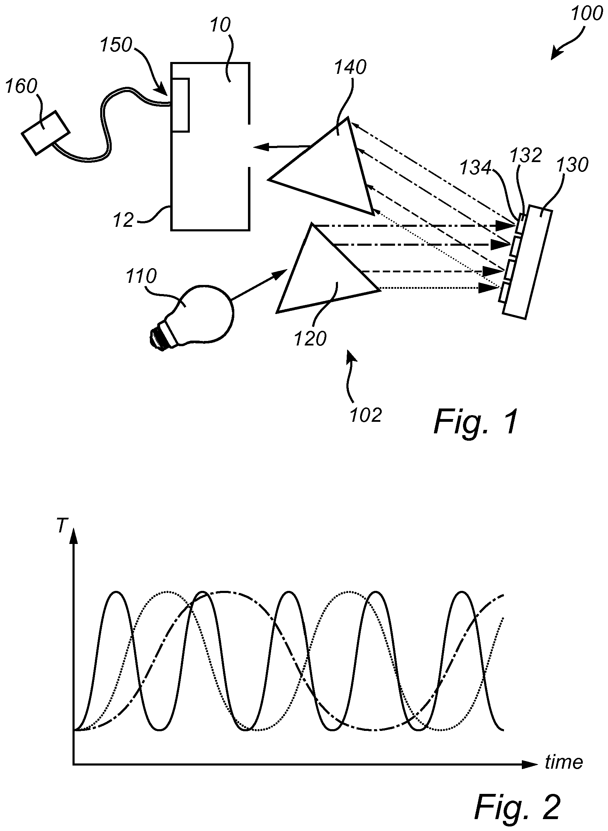

Referring now to Fig. 1, a device 100 for analysis of a test object according to an embodiment is described.

The device 100 may comprise a light source 110 configured to generate light comprising a plurality of wavelengths. It should be realized that the light source 110 is not necessarily part of the device 100 and may be provided in a separate unit external to the device 100.

The light source 110 may be provided by any source that is able to generate the plurality of wavelengths. For instance, the light source 110 may be configured to generate light in a range of wavelengths.

The light source 110 may for instance comprise an incandescent light bulb, a fluorescent lamp, a light-emitting diode (LED), an organic light-emitting diode (OLED), a laser, such as a laser diode or a laser configured to generate an optical frequency comb, or a supercontinuum light source.

The light source 110 may be configured to output the light comprising the plurality of wavelengths to a diffractive element 120. The diffractive element 120 may thus be configured to receive the light comprising the plurality of wavelengths and the diffractive element 120 is configured to form spatially separated light, wherein light of different wavelengths is separated into different spatial directions.

It should be realized that the light source 110 need not necessarily output the plurality of wavelengths simultaneously. Rather, the light source 110 may be configured to output light of different wavelengths at different points in time. The diffractive element 120 may still be configured to direct light of different wavelengths into different spatial directions.

The diffractive element 120 may for instance comprise a prism or a diffraction grating being configured to split and spatially separate light of different wavelengths.

The device 100 may further comprise additional diffractive elements being configured to receive light from the diffractive element 120 and being configured to split and spatially separate light along a different direction than the diffractive element 120. This implies that light of different wavelengths may be spatially separated in two dimensions of a cross-section of a light beam.

The light source 110 and the diffractive element 120 may thus form an optical arrangement 102 configured to output spatially separated light comprising a plurality of wavelengths.

It should be realized that the optical arrangement 102 may be achieved in different manners, such as using a plurality of light generating units being configured to generate light of different wavelengths and further being configured to output light in separate directions for providing spatially separated light.

The device 100 further comprises a spatial light modulator 130. The spatial light modulator 130 is configured to receive the spatially separated light from the optical arrangement 102, such as from the diffractive element 120.

The spatial light modulator 130 may comprise a surface on which the spatially separated light is incident. The spatial light modulator 130 may further comprise individually controllable regions 132. Each individually controllable region 132 may be associated with a portion of the surface of the spatial light modulator 130. Thus, the individually controllable region 132 may be configured to receive a portion of the spatially separated light being incident on the portion of the surface with which the individually controllable region 132 is associated.

The spatial light modulator 130 may be implemented as a digital micromirror device. Thus, the spatial light modulator 130 may comprise a plurality of mirrors 134. The plurality of mirrors 134 may be arranged in a one-dimensional or two-dimensional array. The mirrors 134 may be controllable for controlling a direction into which light incident onto the spatial light modulator 130 will be reflected.

Each individually controllable region 132 may be associated with one or more unique mirrors 134 of the plurality of mirrors. The mirrors 134 may further be mounted in the spatial light modulator 130 so as to allow an angular rotation of the mirrors 134 to be controlled. The angular rotation may for instance be defined by an angle of a normal of the mirror 134 to a normal of a plane in which the array of mirrors 134 is mounted.

Each individually controllable region 132 may individually control the mirrors 134 associated with the region 132. The mirrors 134 may be controlled by a control signal which may set the angular rotation of the mirror 134. Each mirror 134 may thus be controlled to control whether light reflected by the mirror 134 is directed towards the test object 10 or not.

Each mirror 134 may be bi-stable in that the mirror 134 has a first and a second stable position and the control signal may selectively set the mirror 134 to one of the positions based on the control signal. The mirror 134 may be set to the first position for directing light towards the test object 10 and in the second position such that light is not directed by the mirror 134 towards the test object 10.

According to an alternative embodiment, the mirror 134 may be freely adjustable in a range of angular rotations. Thus, the mirror 134 may be set to any selected angular rotation within the range.

According to yet another alternative embodiment, the mirrors 134 may be mounted such that the mirrors 134 may vibrate within a range of angular rotations. Each mirror 134 may be configured with a resonance vibration frequency and different mirrors 134 associated with different individually controllable regions 132 may be configured with different resonance vibration frequencies.

Each individually controllable region 132 is configured to modulate the portion of the spatially separated light received by the individually controllable region 132. The individually controllable region 132 is configured to modulate the portion of the spatially separated light with a modulation frequency for generating modulated light.

The modulated light may imply that absorption of light by the test object 10 is modulated. Using the spatial light modulator 130 comprising mirrors 134, the modulated light received by the test object 10 may be modulated in intensity.

If the mirrors 134 are bi-stable, the individually controllable region 132 may be configured to toggle the mirrors 134 between two states, directing light towards the test object 10 or not. Thus, the modulation provided by the individually controllable region 132 may have a square-shaped waveform.

However, if the mirrors 134 are freely adjustable or configured to vibrate, the modulation may have a different waveform. It should be realized that in some positions of the mirror 134, part of a beam reflected by the mirror 134 may be directed towards the test object 10. The individually controllable region 132 may thus be configured to provide a modulation having for instance a sinusoidal waveform.

It should also be realized that the spatial light modulator may be implemented in other manners. For instance, the spatial light modulator may be configured to modulate a polarization of light instead of or in addition to modulation of the intensity.

The modulation by the individually controllable region 132 generates modulated light that is directed towards the test object 10. The modulated light from the spatial light modulator 130 may be directly incident on the test object 10. However, as shown in Fig. 1, the modulated light may be incident on a recombining element 140. The recombining element 140 may be configured to receive modulated light from the spatial light modulator 130 and configured to output modulated light of different wavelengths in a common beam of modulated light.

The modulated light may be spatially spread, wherein different portions of the light have different wavelengths. The spatial spread of the modulated light may also be wide, such that the spatial light modulator 130 may need to be arranged close to the test object 10 in order to ensure that the modulated light may be properly incident on the test object 10.

The recombining element 140 may be configured to bundle the spatially spread light into a narrower common beam having a relatively small cross-section. The light of different wavelengths may be combined within the common beam such that light of different wavelengths are no longer spatially separated.

The recombining element 140 may for instance be implemented as a prism or diffraction grating.

The modulated light may be incident on the test object 10. For instance, the test object 10 may be in form of a specimen chamber 12 in which the test object 10 may be arranged. This may be a suitable manner of providing a test object 10 for analysis. For instance, a gas or a liquid may be inserted into the specimen chamber 12 for analysis.

The specimen chamber 12 may have a resonant cavity or may have two resonant cavities for using differential detection. The specimen chamber 12 may thus be acoustically resonant to a frequency corresponding to the modulation frequency of modulated light provided by the spatial light modulator 130. The specimen chamber 12 may have a periodic spectrum of acoustic resonance frequencies. The resonance frequencies of the specimen chamber 12 may be matched to a plurality of modulation frequencies provided by the spatial light modulator 130.

The device 100 may be used with a test object that is not suited for being arranged in a specimen chamber. For instance, the device 100 may be used for photo-acoustic spectroscopy or imaging of human tissue. This may for instance be used for detecting blood vessels in the human tissue.

The modulated light being incident on the test object 10 may cause absorption of light in the test object 10. The absorption may be varying due to the modulation of the modulated light inducing a photo-acoustic effect in the test object 10. Thus, the test object 10 may output an acoustic wave due to the varying absorption.

As mentioned above, the modulated light may be modulated in intensity causing a varying absorption in the test object 10. However, absorption in the test object 10 may vary due to another characteristic being modulated in the modulated light. For instance, the test object 10 may have an absorption that is dependent on polarization such that modulation of polarization may induce the photo-acoustic effect in the test object 10.

The device 100 may further comprise a sensor unit 150 configured to detect an acoustic response from the test object 10 based on the photo-acoustic effect being induced in the test object 10 by the modulated light.

The sensor unit 150 may comprise any sensor adapted to detection of an acoustic wave. For instance, the sensor unit 150 may comprise an optomechanical ultrasound sensor (OMUS), a tuning fork, a quartz-enhanced tuning fork, or a piezo-electric sound transducer.

The sensor unit 150 may thus generate a signal representing the acoustic response. The generated signal may further be processed by analog and/or digital signal processing in a processing unit 160.

The individually controllable regions 132 of the spatial light modulator 130 may be configured to modulate the spatially separated light with a plurality of modulation frequencies. Since each individually controllable region 132 may receive a specific wavelength of light based on the spatial separation of light, the individually controllable regions 132 may thus provide different modulation frequencies for different wavelengths of light.

As illustrated in Fig. 2, the modulation frequencies associated with each specific wavelength may thus be mutually unique. In Fig. 2, transmitted intensities over time for three different wavelengths are illustrated by solid, dashed, and dotted lines, having different frequencies.

Each individually controllable region 132 may be provided with a control signal causing the modulation provided by the individually controllable region 132. The control signals of the individually controllable regions 132 may thus provide the plurality of modulation frequencies, causing the individually controllable regions 132 to provide modulation of light with a plurality of modulation frequencies.

The different wavelengths of light may be associated with different characteristics of the test object 10. For instance, different compounds may absorb different wavelengths of light. Thanks to the use of different modulation frequencies for different wavelengths of light, the response related to each wavelength may be determined based on the acoustic wave having a corresponding frequency. Thus, the use of a plurality of modulation frequencies allows distinguishing of responses for different wavelengths of light.

The plurality of modulation frequencies may be related so as not to cause interference in detection of different frequencies of the acoustic waves induced by the photo-acoustic effect. Thus, harmonics of each frequency in the plurality of modulation frequencies may be distinct from the other frequencies in the plurality of modulation frequencies. As an illustrative example, four modulation frequencies may be set to 1 Hz, 2.2 Hz, 3.6 Hz, and 4.8 Hz.

As mentioned above, the individually controllable regions 132 may be designed with resonance vibrations frequencies, wherein different individually controllable regions 132 have different resonance vibration frequencies. This implies that the device 100 may be configured to provide the plurality of distinct modulation frequencies based on the design of the individually controllable regions 132. This may ensure that the individually controllable regions 132 robustly provides modulation using a desired modulation frequency compared to if the modulation frequency is only controlled by a frequency set by a control signal for controlling the individually controllable region 132.

As illustrated in Fig. 2, the individually controllable regions 132 may be configured to simultaneously modulate the portions of the spatially separated light associated with each individually controllable region 132. Since different individually controllable regions 132 provide different modulation frequencies, the acoustic responses associated with different wavelengths may still be distinguished from each other even if light of the different wavelengths is simultaneously output towards the test object 10.

The signal processing of detected signals may be configured to separate the acoustic responses having different frequencies. For instance, an analog or digital frequency demultiplexer may be used for separating the frequencies in the signal from the sensor unit 150.

This ensures that absorption of the test object 10 of a plurality of wavelengths of light may be simultaneously detected. This may facilitate performing photo-acoustic spectroscopy very quickly.

The modulation frequencies may be in a range of 1 Hz - 200 MHz, such as in a range of 1 Hz - 1 MHz. The modulation frequencies used may depend on the application. For instance, if photo-acoustic spectroscopy is to be performed, the modulation frequencies may be in a range of 1 Hz - 1 MHz, and preferably in a range of 1 Hz - 100 kHz. However, if photo-acoustic imaging is to be performed, the modulation frequency may be higher than modulation frequencies used in photo-acoustic spectroscopy, such as using a modulation frequency up to 200 MHz.

It should be realized that different wavelengths of light need not be simultaneously output for simultaneously inducing a photo-acoustic effect in the test object. The individually controllable regions 132 may thus be configured to be controlled between an active state and an inactive state.

In the active state, the individually controllable region 132 will be configured to modulate the portion of the spatially separated light associated with the individually controllable region 132, as explained above.

In the inactive state, the individually controllable region 132 may be controlled so as to ensure that no light is output at all from the individually controllable region 132 towards the test object 10. For instance, if the individually controllable region 132 comprises a mirror 134, the mirror 134 may be placed in an orientation so as to direct light in a direction such that it is not incident on the test object 10.

It should however be realized that the individually controllable region 132 may be inactive in that no modulation of light is provided. Thus, light may be directed towards the test object 10, but no modulation of the light may be provided. For instance, intensity of the light may be constant. This implies that the light received by the test object 10 may still not induce a photo-acoustic effect in the test object 10.

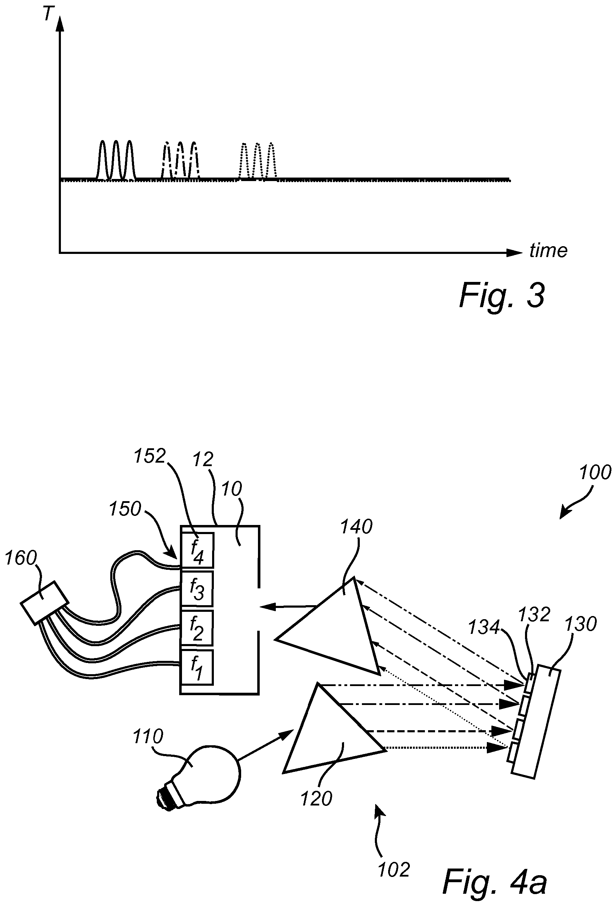

As illustrated in in Fig. 3, the individually controllable regions 132 may be configured to be sequentially set to the active state for sequentially outputting modulated light towards the test object 10. In Fig. 3, transmitted intensities over time for three different wavelengths are illustrated by solid, dashed, and dotted lines, wherein light of different wavelengths is output sequentially in time.

Thus, only one individually controllable region 132 may be set to the active state at a time. The other individually controllable regions 132 are thus set to the inactive state.

This implies that a single wavelength is output towards the test object 10 at a time. The device 100 may thus provide acoustic responses associated with different wavelengths to be distinguished in time. Thus, the individually controllable regions 132 may use the same modulation frequency, such that each wavelength of light may be modulated with the same modulation frequency. However, the individually controllable regions 132 may still be modulated using different modulation frequencies.

Referring now to Figs 4a-b, the sensor unit 150 may comprise a plurality of individual sensors 152.

For instance, a plurality of individual sensors 152 may be used for detecting the same acoustic response. All of the sensors 152 may thus be configured to detect the same frequency of the acoustic response. This may for instance be used with the sequential output of modulated light of different wavelengths illustrated in Fig. 3. By determining a time offset between acoustic responses detected by different sensors 152, a location in the test object 10 being an origin of the acoustic response may be determined. Thus, the plurality of individual sensors 152 may be advantageously used for providing photo-acoustic imaging.

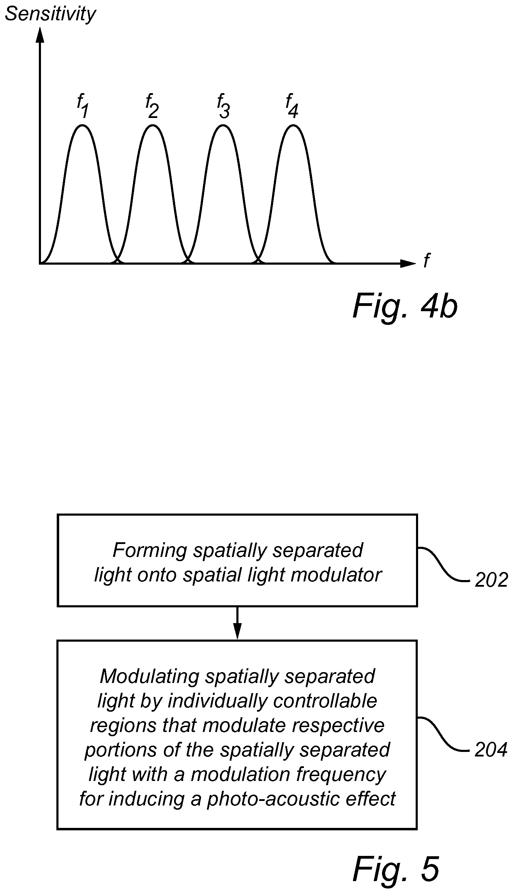

However, as illustrated in Fig. 4b, the individual sensors 152 may have different sensitivity to different frequencies of the acoustic response. Fig. 4b illustrates sensitivity of four different individual sensors 152 illustrated in Fig. 4a.

Each individual sensor 152 may be configured to resonate at a resonance frequency. This may set the sensitivity of the individual sensor 152 as the sensor 152 may be particularly sensitive to frequencies of the acoustic response corresponding to the resonance frequency of the sensor 152.

The individual sensors 152 may have different resonance frequencies, indicated by frequencies f₁, f₂, f₃, and f₄ in Figs 4a-b. The resonance frequencies of the individual sensors 152 may be matched to the modulation frequencies provided by the spatial light modulator 130.

As illustrated in Fig. 4b, the individual sensors 152 may not be sensitive to frequencies outside a sensitivity band around the resonance frequency, or at least sensitivity of the individual sensors 152 outside the sensitivity band is significantly lower than sensitivity of the individual sensors 152 in the respective sensitivity band. This implies that noise and cross-talk between acoustic responses having other frequencies than the acoustic response being detected by an individual sensor 152 may be reduced or avoided. In addition, harmonics of a frequency of an acoustic response may not affect detection of other acoustic responses.

Referring now to Fig. 5, a method for controlling inducing of a photo-acoustic effect in a test object will be described.

The method comprises forming 202 spatially separated light onto a spatial light modulator, wherein light of different wavelengths of the plurality of wavelengths is separated into different spatial directions. The forming of spatially separated light may be achieved by receiving light comprising a plurality of wavelengths on a diffractive element and spatially separating the light by wavelength by the diffractive element. According to an alternative, the forming of spatially separated light may be achieved by outputting light of different wavelengths from a plurality of light generating units, wherein each light generating unit may output light of a mutually unique wavelength and may direct light in a unique spatial direction.

The method further comprises modulating 204 the spatially separated light using a spatial light modulator comprising individually controllable regions. Each individually controllable region receives a portion of the spatially separated light for associating each individually controllable region with a specific wavelength of the plurality of wavelengths. Each individually controllable region modulates the portion of the spatially separated light with a modulation frequency for generating modulated light for inducing a photo-acoustic effect in the test object.

The spatially separated light may be modulated using a plurality of modulation frequencies such that different wavelengths of light are modulated by different modulation frequencies. This may allow the method to output modulated light of different wavelengths simultaneously onto the test object, since acoustic responses corresponding to different wavelengths of light may be distinguished using by the different frequencies of the acoustic responses.

However, the method may be configured to sequentially set the individually controllable regions to an active state. This implies that the individually controllable regions may sequentially output modulated light of different wavelengths. In such case, the light of different wavelengths need not be modulated by different modulation frequencies and each individually controllable region may thus modulate light with the same modulation frequency.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (100) for analysis of a test object (10) using photo-acoustic effect, said device (100) comprising:
an optical arrangement (102) configured to output spatially separated light comprising a plurality of wavelengths, wherein light of different wavelengths of the plurality of wavelengths is separated into different spatial directions; and
a spatial light modulator (130) configured to receive the spatially separated light, wherein the spatial light modulator (130) comprises a plurality of individually controllable regions (132), wherein each individually controllable region (132) is configured to receive a portion of the spatially separated light for associating each individually controllable region (132) with a specific wavelength of the plurality of wavelengths, wherein each individually controllable region (132) is configured to modulate the portion of the spatially separated light with a modulation frequency for generating modulated light for inducing a photo-acoustic effect in the test object.

2. The device according to claim 1, wherein the individually controllable regions (132) of the spatial light modulator (130) are configured to modulate the spatially separated light with a plurality of modulation frequencies, such that the modulation frequency associated with each specific wavelength of light is mutually unique.

3. The device according to claim 2, wherein the individually controllable regions (132) are controlled by the plurality of modulation frequencies, wherein harmonics of each frequency in the plurality of modulation frequencies are distinct from all other frequencies of the plurality of modulation frequencies.

4. The device according to claim 2 or 3, wherein the individually controllable regions (132) are configured to simultaneously modulate the portions of the spatially separated light associated with each individually controllable region (132).

5. The device according to any one of claims 1-3, wherein the individually controllable regions (132) are configured to be controlled between an active state and an inactive state, wherein the individually controllable regions (132) in the active state are configured to modulate the portion of the spatially separated light and wherein the individually controllable regions (132) in the inactive state are configured to avoid output of light for inducing a photo-acoustic effect.

6. The device according to claim 5, wherein the individually controllable regions (132) are configured to be sequentially set to the active state for sequentially outputting modulated light of different specific wavelengths.

7. The device according to any one of the preceding claims, wherein the spatial light modulator (130) comprises a plurality of mirrors, wherein each individually controllable region (132) is associated with one or more unique mirrors (134) of the plurality of mirrors, wherein an angular orientation of the mirrors (134) is individually controllable.

8. The device according to claim 7, wherein each mirror (134) is configured with a resonance vibration frequency, wherein different mirrors associated with different individually controllable regions are configured with different resonance vibration frequencies.

9. The device according to any one of the preceding claims, further comprising a light source (110) configured to generate the light comprising the plurality of wavelengths and configured to output the light comprising the plurality of wavelengths to a diffractive element (120), wherein the diffractive element (120) is configured to form the spatially separated light.

10. The device according to any one of the preceding claims, further comprising a recombining element (140), wherein the recombining element (140) is configured to receive modulated light from the spatial light modulator (130) and configured to output modulated light of different wavelengths in a common beam of modulated light.

11. The device according to any one of the preceding claims, further comprising a sensor unit (150) configured to detect an acoustic response from the test object (10) based on the photo-acoustic effect being induced in the test object (10) by the modulated light.

12. The device according to claim 11, wherein the sensor unit (150) comprises a plurality of individual sensors (152).

13. The device according to claim 12, wherein each individual sensor (152) is configured to resonate at a resonance frequency, wherein the resonance frequencies of different individual sensors are different, and wherein the resonance frequencies of the individual sensors (152) are matched to modulation frequencies of the spatial light modulator (130).

14. The device according to any one of the preceding claims, wherein the modulation frequency is in a range of 1 Hz - 200 MHz, such as in a range of 1 Hz - 1 MHz.

15. A method for controlling inducing of a photo-acoustic effect in a test object, said method comprising:
forming (202) spatially separated light onto a spatial light modulator, wherein light of different wavelengths of the plurality of wavelengths is separated into different spatial directions; and
modulating (204) the spatially separated light using a spatial light modulator comprising individually controllable regions, wherein each individually controllable region receives a portion of the spatially separated light for associating each individually controllable region with a specific wavelength of the plurality of wavelengths, wherein each individually controllable region modulates the portion of the spatially separated light with a modulation frequency for generating modulated light for inducing a photo-acoustic effect in the test object.
